# EUROPEAN PATENT APPLICATION

(11) **EP 4 576 609 A1**
(43) Date of publication of application: **25.06.2025**
(21) Application number: 23864453.8
(22) Date of filing: 30.06.2023
(51) Int. Cl.: H04B 10/61

(54) **OPTICAL RECEIVER MODULE, OPTICAL RECEIVER DEVICE, AND FREQUENCY ADJUSTMENT METHOD**

(30) Priority: 15.09.2022 CN 202211122640
(71) Applicant: Huawei Technologies Co., Ltd., Shenzhen, Guangdong 518129 (CN)
(72) Inventor: CHEN, Xi, Shenzhen, Guangdong 518129 (CN); LI, Liangchuan, Shenzhen, Guangdong 518129 (CN); CHANG, Tianhai, Shenzhen, Guangdong 518129 (CN)
(74) Representative: Gill Jennings & Every LLP
(86) International application number: PCT/CN2023/105158
(87) International publication number: WO 2024/055716

(57) **Abstract**

This application provides an optical receiving module, and is applied to the field of coherent communication. The optical receiving module includes a local oscillator laser, a coherent receiver, and a signal processor. The local oscillator laser is configured to output a local oscillator laser signal. The coherent receiver is configured to receive a target optical signal and the local oscillator laser signal, and output a target digital electrical signal based on the target optical signal and the local oscillator laser signal. The signal processor is configured to obtain a current power value of the target digital electrical signal, and obtain a target frequency offset based on the current power value and a target mapping relationship. The signal processor is further configured to adjust a center frequency of the local oscillator laser when the target frequency offset is greater than or equal to a first threshold. **In** this application, the frequency of the local oscillator laser is adjusted through feedback of the signal processor, and a wavelength etalon may not need to be introduced, thereby reducing costs of the optical receiving module.

## Description

This application claims priority to Chinese Patent Application No. 202211122640.0, filed with the China National Intellectual Property Administration on September 15, 2022 and entitled "OPTICAL RECEIVING MODULE, OPTICAL RECEIVING DEVICE, AND FREQUENCY ADJUSTMENT METHOD", which is incorporated herein by reference in its entirety.

### TECHNICAL FIELD

This application relates to the field of coherent communication, and in particular, to an optical receiving module, an optical receiving device, and a frequency adjustment method.

### BACKGROUND

In the field of coherent communication, a local oscillator laser is disposed on an optical receiving module. A center frequency of the local oscillator laser needs to be close to a center frequency of a received signal to ensure that the signal can be correctly received.

Therefore, before coherent communication, the optical receiving module needs to adjust the frequency of the local oscillator laser. Specifically, an adjustment system of the optical receiving module includes the local oscillator laser, an optical splitter, a wavelength etalon, and a detection and control unit. The local oscillator laser is configured to output a local oscillator laser signal. The optical splitter is configured to receive the local oscillator laser signal and output two laser sub-signals. One of the two laser sub-signals is used for coherent reception. The wavelength etalon is configured to receive the other laser sub-signal and output a feature optical signal. The detection and control unit is configured to detect the feature optical signal and adjust the center frequency of the local oscillator laser based on a detection result. The feature optical signal passing through the etalon has a feature. The feature can be identified by the detection and control unit, to complete the frequency adjustment of the local oscillator laser.

In actual application, costs of the wavelength etalon are high. As a result, costs of the optical receiving module are increased.

### SUMMARY

This application provides an optical receiving module, an optical receiving device, and a frequency adjustment method. A frequency of a local oscillator laser is adjusted through feedback of a signal processor, and a wavelength etalon may not need to be introduced, thereby reducing costs of the optical receiving module.

A first aspect of this application provides an optical receiving module. The optical receiving module includes a local oscillator laser, a coherent receiver, and a signal processor. The local oscillator laser is configured to output a local oscillator laser signal. The coherent receiver is configured to receive a target optical signal and the local oscillator laser signal, and output a target digital electrical signal based on the target optical signal and the local oscillator laser signal. The signal processor is configured to obtain a current power value of the target digital electrical signal, and obtain a target frequency offset based on the current power value and a target mapping relationship. The target frequency offset is a difference between a current center frequency of the local oscillator laser signal and a target center frequency of the target optical signal. The target mapping relationship includes a correspondence between a power value and a frequency offset. The signal processor is further configured to adjust a center frequency of the local oscillator laser when the target frequency offset is greater than or equal to a first threshold, so that the center frequency of the local oscillator laser is close to the target center frequency.

In an optional manner of the first aspect, the signal processor is further configured to obtain a value relationship between the current center frequency and the target center frequency. When the current center frequency is greater than the target center frequency, the signal processor is configured to decrease the center frequency of the local oscillator laser. When the current center frequency is less than the target center frequency, the signal processor is configured to increase the center frequency of the local oscillator laser. Frequency adjustment efficiency may be improved by determining the value relationship, so that the center frequency of the local oscillator laser is close to the target center frequency as soon as possible.

In an optional manner of the first aspect, the signal processor is configured to obtain the value relationship between the current center frequency and the target center frequency based on the target digital electrical signal. The value relationship is obtained by using the target digital electrical signal, and an additional frequency measurement device does not need to be introduced, thereby reducing costs of the optical receiving module.

In an optional manner of the first aspect, the center frequency of the local oscillator laser signal gradually changes along a first direction. The signal processor is further configured to obtain a target power change curve of the target digital electrical signal. The signal processor is configured to obtain the value relationship based on the target power change curve. When the target power change curve gradually increases along the first direction, the target center frequency is located in the first direction of the current center frequency. Impact of the target frequency offset on determining the value relationship may be eliminated by using the target power change curve, so that reliability of obtaining the value relationship is improved.

In an optional manner of the first aspect, the signal processor is further configured to obtain two power values of the target digital electrical signal at different frequencies. The two power values include a first power value and a second power value. A frequency corresponding to the second power value is greater than a frequency corresponding to the first power value. The signal processor is configured to obtain the value relationship based on the two power values. When the second power value is greater than the first power value, the target center frequency is greater than the current center frequency. The value relationship is obtained by using the two power values, and there may be no need to change the center frequency of the local oscillator laser signal to obtain the target power change curve. Therefore, in this application, efficiency of obtaining the value relationship may be improved, so that the frequency adjustment efficiency is improved.

In an optional manner of the first aspect, the coherent receiver is configured to receive a plurality of wavelength signals of different wavelengths. The target optical signal is N wavelength signals in the plurality of wavelength signals. N is an integer greater than 0. The plurality of wavelength signals are in one-to-one correspondence with a plurality of digital electrical signals. The signal processor is further configured to determine the target digital electrical signal from the plurality of digital electrical signals. Before the target digital electrical signal is determined, accuracy of the obtained target frequency offset and value relationship is affected. As a result, reliability of frequency adjustment is affected. Therefore, in this application, the reliability of the frequency adjustment may be improved.

In an optional manner of the first aspect, frequencies of the plurality of wavelength signals are sorted in the first direction. The target optical signal is a K^{th} wavelength signal in the plurality of wavelength signals. The signal processor is configured to determine that a K^{th} digital electrical signal in the plurality of digital electrical signals is the target digital electrical signal. Frequencies of the plurality of digital electrical signals are sorted in the first direction. The signal processor obtains a value of K in advance, and determines the target digital electrical signal based on the value of K.

In an optional manner of the first aspect, the target optical signal carries a target identifier. The signal processor is configured to determine the target digital electrical signal from the plurality of digital electrical signals based on the target identifier.

A second aspect of this application provides an optical receiving device. The optical receiving device includes a processor and the optical receiving module according to any one of the first aspect or the optional manners of the first aspect. The optical receiving module is configured to receive a target optical signal, and obtain a target digital electrical signal based on the target optical signal. The processor is configured to receive the target digital electrical signal, and perform data processing on the target digital electrical signal.

A third aspect of this application provides an optical communication system. The optical communication system includes an optical transmitting device and the optical receiving device according to the second aspect. The optical transmitting device is configured to transmit a target optical signal to the optical receiving device. The optical receiving device is configured to receive the target optical signal, obtain a target digital electrical signal based on the target optical signal, and perform data processing on the target digital electrical signal.

A fourth aspect of this application provides a frequency adjustment method. The frequency adjustment method may be applied to an optical receiving module or an optical receiving device. The following provides descriptions by using an example in which the frequency adjustment method may be applied to the optical receiving device. The frequency adjustment method includes the following steps: The optical receiving device outputs a local oscillator laser signal via a local oscillator laser. The optical receiving device obtains a target digital electrical signal based on the local oscillator laser signal and a received target optical signal. The optical receiving device obtains a target frequency offset based on a current power value of the target digital electrical signal and a target mapping relationship. The target frequency offset is a difference between a current center frequency of the local oscillator laser signal and a target center frequency of the target optical signal. The target mapping relationship includes a correspondence between a power value and a frequency offset. The optical receiving device adjusts a center frequency of the local oscillator laser when the target frequency offset is greater than or equal to a first threshold.

In an optional manner of the fourth aspect, the frequency adjustment method further includes the following steps: The optical receiving device obtains a value relationship between the current center frequency and the target center frequency. When the current center frequency is greater than the target center frequency, the optical receiving device decreases the center frequency of the local oscillator laser. When the current center frequency is less than the target center frequency, the optical receiving device increases the center frequency of the local oscillator laser.

In an optional manner of the fourth aspect, the optical receiving device obtains the value relationship between the current center frequency and the target center frequency based on the target digital electrical signal.

In an optional manner of the fourth aspect, the center frequency of the local oscillator laser signal gradually changes along a first direction. The frequency adjustment method further includes the following steps: The optical receiving device obtains a target power change curve of the target digital electrical signal. The optical receiving device obtains the value relationship based on the target power change curve. When the target power change curve gradually increases along the first direction, the target center frequency is located in the first direction of the current center frequency.

In an optional manner of the fourth aspect, the frequency adjustment method further includes the following steps: The optical receiving device obtains two power values of the target digital electrical signal at different frequencies. The two power values include a first power value and a second power value. A frequency corresponding to the second power value is greater than a frequency corresponding to the first power value. The optical receiving device obtains the value relationship based on the two power values. When the second power value is greater than the first power value, the target center frequency is greater than the current center frequency.

In an optional manner of the fourth aspect, the frequency adjustment method further includes the following steps: The optical receiving device receives a plurality of wavelength signals of different wavelengths. The target optical signal is N wavelength signals in the plurality of wavelength signals. N is an integer greater than 0. The plurality of wavelength signals are in one-to-one correspondence with a plurality of digital electrical signals. The optical receiving device determines the target digital electrical signal from the plurality of digital electrical signals.

In an optional manner of the fourth aspect, frequencies of the plurality of wavelength signals are sorted in the first direction, and the target optical signal is a K^{th} wavelength signal in the plurality of wavelength signals. The optical receiving device determines that a K^{th} digital electrical signal in the plurality of digital electrical signals is the target digital electrical signal. Frequencies of the plurality of digital electrical signals are sorted in the first direction.

In an optional manner of the fourth aspect, the target optical signal carries a target identifier. The optical receiving device determines the target digital electrical signal from the plurality of digital electrical signals based on the target identifier.

### BRIEF DESCRIPTION OF DRAWINGS

FIG. 1 is a schematic flowchart of a frequency adjustment method according to an embodiment of this application;
FIG. 2a is a diagram of a spectrum of a first digital electrical signal according to an embodiment of this application;
FIG. 2b is a diagram of a first structure of a target digital electrical signal according to an embodiment of this application;
FIG. 2c is a diagram of a second structure of a target digital electrical signal according to an embodiment of this application;
FIG. 2d is a diagram of a third structure of a target digital electrical signal according to an embodiment of this application;
FIG. 2e is a diagram of a fourth structure of a target digital electrical signal according to an embodiment of this application;
FIG. 3 is a schematic flowchart of a method for determining a value relationship according to an embodiment of this application;
FIG. 4 is a diagram of a fifth structure of a target digital electrical signal according to an embodiment of this application;
FIG. 5 is a diagram of spectrums of a plurality of digital electrical signals according to an embodiment of this application;
FIG. 6 is a diagram of a structure of an optical receiving module according to an embodiment of this application;
FIG. 7 is a diagram of a structure of an optical receiving device according to an embodiment of this application; and
FIG. 8 is a diagram of a structure of an optical communication system according to an embodiment of this application.

### DESCRIPTION OF EMBODIMENTS

This application provides an optical receiving module, an optical receiving device, and a frequency adjustment method. A frequency of a local oscillator laser is adjusted through feedback of a signal processor, and a wavelength etalon may not need to be introduced, thereby reducing costs of the optical receiving module. It should be understood that "first", "second", "target", and the like used in this application are merely for distinguishing descriptions, but cannot be understood as an indication or implication of relative importance or an indication or implication of a sequence. In addition, for brevity and clarity, reference numbers and/or letters are repeated in a plurality of accompanying drawings of this application. Repetition is not indicative of a strict limiting relationship between various embodiments and/or configurations.

The frequency adjustment method in this application is applied to the field of coherent communication. In the field of coherent communication, a center frequency of a local oscillator laser needs to be close to a center frequency of a received signal to ensure that the signal can be correctly received. Therefore, before coherent communication is performed, an optical receiving module may adjust the center frequency of the local oscillator laser by using a wavelength etalon. However, costs of the wavelength etalon are high. As a result, costs of the optical receiving module are increased.

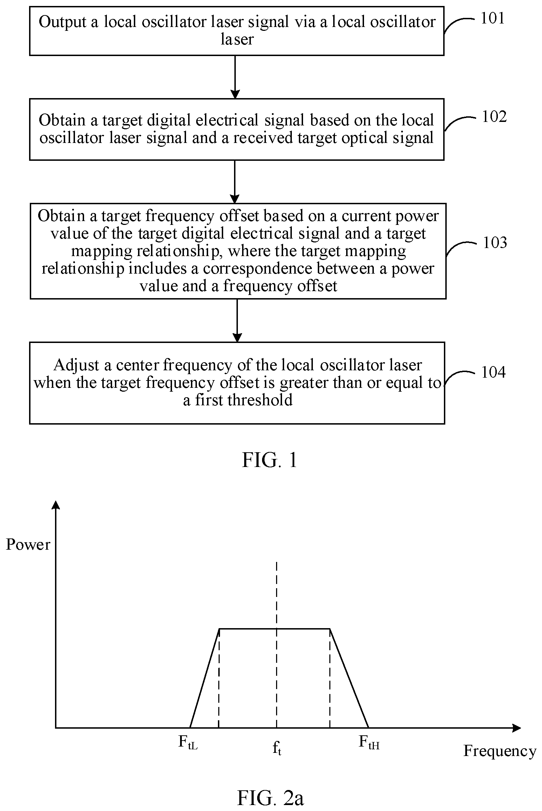

Therefore, an embodiment of this application provides a frequency adjustment method. The frequency adjustment method may be applied to an optical receiving module or an optical receiving device. In a subsequent example, the optical receiving device is used as an example for description. FIG. 1 is a schematic flowchart of a frequency adjustment method according to an embodiment of this application. As shown in FIG. 1, the frequency adjustment method includes the following steps.

In step 101, an optical receiving device outputs a local oscillator laser signal via a local oscillator laser. The local oscillator laser is disposed in the optical receiving device. A center frequency of the local oscillator laser is affected by a frequency-related parameter. The frequency-related parameter includes a temperature, a current, a voltage, or the like of the local oscillator laser. The optical receiving device may control the center frequency of the local oscillator laser, in other words, control an initial center frequency of the local oscillator laser signal by setting the frequency-related parameter. The initial center frequency and a subsequently adjusted frequency may be referred to as a current center frequency.

In step 102, the optical receiving device obtains a target digital electrical signal based on the local oscillator laser signal and a received target optical signal. An optical transmitting device obtains the target optical signal by modulating a first digital electrical signal, and sends the target optical signal to the optical receiving device. The optical receiving device receives the target optical signal from the optical transmitting device, performs coherent demodulation on the local oscillator laser signal and the target optical signal, and outputs the target digital electrical signal.

It should be understood that the target digital electrical signal received by the optical receiving device may be different from the first digital electrical signal sent by the optical transmitting device. FIG. 2a is a diagram of a spectrum of a first digital electrical signal according to an embodiment of this application. As shown in FIG. 2a, a center frequency of the first digital electrical signal is fₜ. Boundary frequencies of the first digital electrical signal are f_{tL} and f_{tH}. A spectrum range of the first digital electrical signal is (f_{tL}, f_{tH}). A center frequency of a local oscillator laser signal is f₀. A target digital electrical signal is affected by an absolute value of a difference between fₜ and f₀. The absolute value of the difference between fₜ and f₀ is referred to as a frequency offset. The following separately describes cases of different frequency offsets.

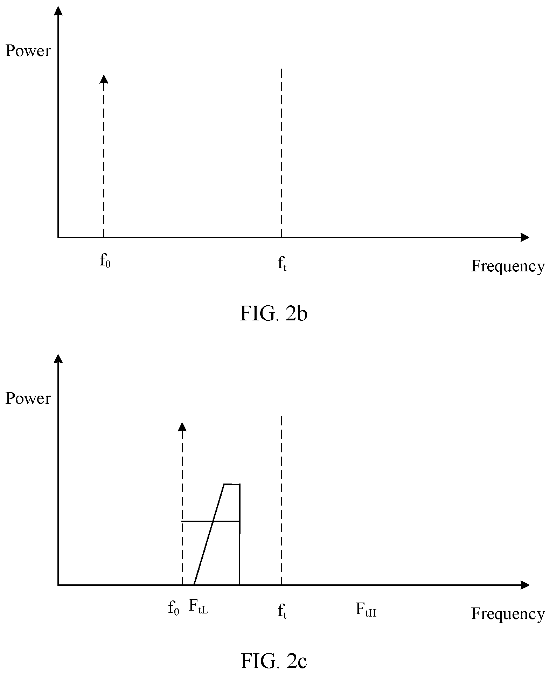

When a frequency offset is excessively large, the target digital electrical signal is noise, and is irrelevant to the first digital electrical signal. FIG. 2b is a diagram of a first structure of a target digital electrical signal according to an embodiment of this application. As shown in FIG. 2b, a frequency offset is excessively large, and the optical receiving device cannot obtain a signal related to a first digital electrical signal.

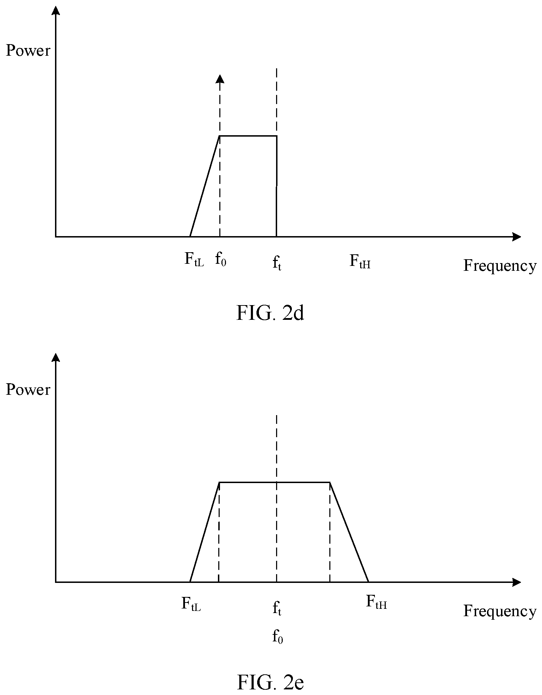

When a frequency offset is small but is greater than a threshold, the target digital electrical signal includes a part of the first digital electrical signal. FIG. 2c is a diagram of a second structure of a target digital electrical signal according to an embodiment of this application. As shown in FIG. 2c, a frequency offset is small, and the target digital electrical signal obtained by the optical receiving device is a part of the first digital electrical signal in FIG. 2a. In addition, as the frequency offset gradually decreases, a shape of the target digital electrical signal is gradually similar to a shape of the first digital electrical signal. FIG. 2d is a diagram of a third structure of a target digital electrical signal according to an embodiment of this application. As shown in FIG. 2d, in comparison with FIG. 2c, a frequency offset is smaller. In this case, the target digital electrical signal includes more parts of a first digital electrical signal.

When the frequency offset is less than a threshold, the target digital electrical signal includes the complete first digital electrical signal. FIG. 2e is a diagram of a fourth structure of a target digital electrical signal according to an embodiment of this application. As shown in FIG. 2e, fₜ coincides with f₀, and a frequency offset is 0. In this case, the target digital electrical signal includes a complete first digital electrical signal. A shape of the target digital electrical signal is similar to a shape of the first digital electrical signal.

In step 103, the optical receiving device obtains a target frequency offset based on a current power value of the target digital electrical signal and a target mapping relationship. The target mapping relationship includes a correspondence between a power value and a frequency offset. It can be learned from the foregoing descriptions of FIG. 2b to FIG. 2e that the target digital electrical signal varies with the frequency offset, in other words, power of the target digital electrical signal varies with the frequency offset. Therefore, the optical receiving device may obtain the target mapping relationship in the following manner. The optical receiving device gradually adjusts the center frequency of the local oscillator laser to obtain the power of the target digital electrical signal. The optical receiving device establishes the target mapping relationship based on the power of the target digital electrical signal.

Table 1 is an example of the target mapping relationship provided in this embodiment of this application. As shown in Table 1, local oscillator laser signals of different center frequencies are output by adjusting the center frequency of the local oscillator laser. The different center frequencies include a center frequency 1, a center frequency 2, and a center frequency 3. The optical receiving device obtains a center frequency of the target optical signal. A manner in which the optical receiving device obtains the center frequency of the target optical signal is not limited in this embodiment of this application. The center frequency of the target optical signal is a center frequency 0. The optical receiving device obtains the frequency offset based on the center frequency of the target optical signal and the center frequency of the local oscillator laser. The optical receiving device obtains different power values of the target digital electrical signal at different center frequencies. Table 1 includes the correspondence between a power value of the target digital electrical signal and a frequency offset.

**Table 1**

| Center frequency of the local oscillator laser | Center frequency of the target optical signal | Frequency offset | Power of the target digital electrical signal |
|---|---|---|---|
| Center frequency 1 | Center frequency 0 | Frequency offset 1 | Power 1 |
| Center frequency 2 | Center frequency 0 | Frequency offset 2 | Power 2 |
| Center frequency 3 | Center frequency 0 | Frequency offset 3 | Power 3 |

In the foregoing example, the optical receiving device obtains the target mapping relationship by adjusting the center frequency of the local oscillator laser. In actual application, the target mapping relationship may be applicable to different devices. Therefore, the optical receiving device may alternatively directly obtain the target mapping relationship from another device.

It can be learned from the foregoing descriptions of FIG. 2a to FIG. 2e that the power of the target digital electrical signal varies with the center frequency of the local oscillator laser. On the current center frequency, the optical receiving device may obtain the current power value of the target digital electrical signal. The target mapping relationship includes the correspondence between a power value and a frequency offset. Therefore, the optical receiving device obtains the target frequency offset based on the current power value and the target mapping relationship. For example, in Table 1, when the current power value is the power 2, the target frequency offset is the frequency offset 2.

In step 104, the optical receiving device adjusts the center frequency of the local oscillator laser when the target frequency offset is greater than or equal to a first threshold. When the target frequency offset is less than the first threshold, the optical receiving device may not need to adjust the center frequency of the local oscillator laser. In the foregoing step 103, the optical receiving device obtains the target frequency offset. The optical receiving device may store the first threshold, or obtain the first threshold from another device. The first threshold may be 100 megahertz (megahertz, MHz) or 200 MHz. When the target frequency offset is greater than or equal to the first threshold, the optical receiving device adjusts the center frequency of the local oscillator laser by adjusting the frequency-related parameter, so that the center frequency of the local oscillator laser is close to a target center frequency of the target optical signal. After the frequency is adjusted, the local oscillator laser is configured to output an adjusted local oscillator laser signal. The optical receiving device may periodically perform steps 101 to 104 until the target frequency offset is less than the first threshold.

In this embodiment of this application, the optical receiving device adjusts the frequency of the local oscillator laser by using the target digital electrical signal, and the wavelength etalon may not need to be introduced. Therefore, in this embodiment of this application, costs of the optical receiving device may be reduced.

In this embodiment of this application, when the target center frequency and the current center frequency are not determined, the optical receiving device can only randomly adjust the center frequency of the local oscillator laser. As a result, frequency adjustment efficiency is reduced. Therefore, in this embodiment of this application, the optical receiving device may be further configured to obtain a value relationship between the current center frequency and the target center frequency. When the current center frequency is greater than the target center frequency, the optical receiving device decreases the center frequency of the local oscillator laser. When the current center frequency is less than the target center frequency, the optical receiving device increases the center frequency of the local oscillator laser. In a subsequent example, the value relationship between the current center frequency and the target center frequency is referred to as a value relationship for short. The optical receiving device may obtain the value relationship in a plurality of manners, which are separately described below.

In a first example, the optical receiving device may receive information about the target center frequency from the optical transmitting device, or the optical receiving device stores a default center frequency of the target optical signal. The optical receiving device uses the default center frequency as the target center frequency. It can be learned from the foregoing descriptions of step 101 that the center frequency of the local oscillator laser is affected by the frequency-related parameter. Therefore, the local oscillator laser may determine the current center frequency of the local oscillator laser based on the frequency-related parameter. The optical receiving device may determine the value relationship based on the current center frequency and the target center frequency.

In actual application, the optical receiving device may only be capable of controlling the initial center frequency of the local oscillator laser within a specific range. Therefore, to improve reliability of determining the value relationship in the first example, the optical receiving device may set, in step 101 in FIG. 1, a value of the initial center frequency to be greater than f_{tH} or less than f_{tL}.

In a second example, the optical receiving device measures the target center frequency of the target optical signal by using a frequency measurement device. The frequency measurement device may be an oscilloscope, an optical spectrometer, or the like. The optical receiving device may further determine the current center frequency of the local oscillator laser based on the frequency-related parameter. After measuring the target center frequency, the optical receiving device determines the value relationship based on the current center frequency and the target center frequency.

In a third example, the optical receiving device obtains the value relationship between the current center frequency and the target center frequency based on the target digital electrical signal. In this example, depending on whether the first digital electrical signal is detected by using the initial center frequency, the optical receiving device may obtain the value relationship in different manners. Descriptions are separately provided below.

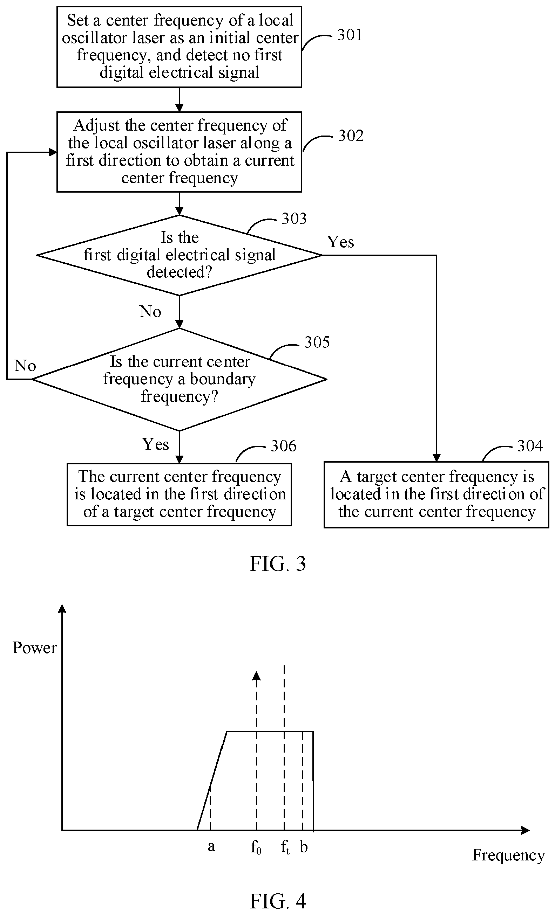

When the optical receiving device detects no first digital electrical signal by using the initial center frequency, the optical receiving device determines the value relationship by adjusting the initial center frequency of the local oscillator laser. FIG. 3 is a schematic flowchart of a method for determining a value relationship according to an embodiment of this application. As shown in FIG. 3, a method for determining a value relationship includes the following steps.

In step 301, an optical receiving device sets a center frequency of a local oscillator laser as an initial center frequency. On the initial center frequency, the optical receiving device detects no first digital electrical signal. Detecting no first digital electrical signal indicates that a target digital electrical signal does not include the first digital electrical signal. In this case, a difference between a target center frequency and the initial center frequency is excessively large, as shown in FIG. 2b.

In step 302, the optical receiving device adjusts the center frequency of the local oscillator laser along a first direction to obtain a current center frequency. The first direction may be a frequency increasing direction or a frequency decreasing direction. For ease of description, an example in which the first direction is the frequency increasing direction is used for description. The optical receiving device increases the center frequency of the local oscillator laser to obtain the current center frequency. To improve efficiency of determining the value relationship, the optical receiving device may set a proper step value. The optical receiving device adjusts the center frequency of the optical receiving device based on the step value. For example, the step value is less than a difference between f_{tH} and f_{tL}.

In step 303, the optical receiving device determines whether the first digital electrical signal is detected. If the first digital electrical signal is detected, the optical receiving device performs step 304. If the first digital electrical signal is not detected, the optical receiving device performs step 305.

In step 304, the optical receiving device determines that the target center frequency is located in the first direction of the current center frequency. When the first direction is the frequency increasing direction, the target center frequency is greater than the current center frequency. When the first direction is the frequency decreasing direction, the target center frequency is less than the current center frequency. The optical receiving device may further determine that the target center frequency is located in the first direction of the initial center frequency.

In step 305, the optical receiving device determines whether the current center frequency is a boundary frequency. In actual application, a frequency adjustment range of the local oscillator laser is limited. Therefore, there is a boundary frequency in the frequency adjustment range of the local oscillator laser. The optical receiving device determines whether the current center frequency is the boundary frequency. If the current center frequency is the boundary frequency, the optical receiving device performs step 306. If the current center frequency is not the boundary frequency, the optical receiving device performs step 302.

In step 306, the optical receiving device determines that the current center frequency is located in the first direction of the target center frequency. The optical receiving device may further determine that the initial center frequency is located in the first direction of the target center frequency.

When detecting the first digital electrical signal by using the initial center frequency, the optical receiving device may determine the value relationship in either of the following two manners.

In a first manner, the optical receiving device obtains two power values of the target digital electrical signal at different frequencies. The two power values include a first power value and a second power value. A frequency corresponding to the second power value is greater than a frequency corresponding to the first power value. The optical receiving device obtains the value relationship based on the two power values. The frequency corresponding to the second power value or the frequency corresponding to the first power value may be the current center frequency, or may not be the current center frequency. When the second power value is greater than the first power value, the target center frequency is greater than the initial center frequency. When the second power value is less than the first power value, the target center frequency is less than the initial center frequency. For example, FIG. 4 is a diagram of a fifth structure of a target digital electrical signal according to an embodiment of this application. As shown in FIG. 4, a frequency corresponding to a second power value is b. A frequency corresponding to a first power value is a. If the second power value is greater than the first power value, the optical receiving device determines that a target center frequency is greater than an initial center frequency.

It should be understood that, in the first manner, the initial center frequency may also be referred to as a current center frequency. When the second power value is greater than the first power value, the target center frequency is greater than the current center frequency. When the second power value is less than the first power value, the target center frequency is less than the current center frequency.

It should be understood that, in the example in FIG. 4, the frequency a may refer to a frequency range. In this case, the optical receiving device may use an average value or a power sum of a plurality of power values corresponding to the frequency range a as the first power value. Similarly, the frequency b may also refer to a frequency range.

It should be understood that, in the example in FIG. 4, the frequency a and the frequency b are located on two sides of the current center frequency f₀. In actual application, the frequency a and the frequency b may alternatively be located on a same side of f₀. To improve reliability of the first manner, the optical receiving device may set a frequency spacing between and locations of the frequency a and the frequency b. For example, a difference between the frequency a and f₀ is equal to a difference between f_{tL} and fₜ. A difference between the frequency b and f₀ is equal to a difference between f_{tH} and fₜ. The frequency a and the frequency b are symmetrically distributed on both sides of f₀.

In a second manner, the optical receiving device adjusts a center frequency of a local oscillator laser signal, so that the center frequency of the local oscillator laser signal gradually changes along a first direction. For example, the first direction is a wavelength increasing direction. In a process in which the center frequency changes, the optical receiving device measures power of the target digital electrical signal corresponding to different center frequencies. It can be learned from the foregoing descriptions in FIG. 2b to FIG. 2e that, in the process in which the center frequency of the local oscillator laser signal changes, a power value of the target digital electrical signal changes. The optical receiving device obtains a target power change curve of the target digital electrical signal. The optical receiving device obtains a value relationship based on the target power change curve. When the target power change curve gradually increases along the first direction, the target center frequency is located in the first direction of the current center frequency. When the target power change curve gradually decreases along the first direction, the current center frequency is located in the first direction of the target center frequency.

In actual application, the optical receiving device may further determine a value relationship between the initial center frequency and the target center frequency. When the target power change curve gradually increases along the first direction, the target center frequency is located in the first direction of the initial center frequency. When the target power change curve gradually decreases along the first direction, the initial center frequency is located in the first direction of the target center frequency.

It should be understood that, in actual application, the optical receiving device may perform preprocessing on the target digital electrical signal. The preprocessing includes amplification, noise cancellation, and the like. In the foregoing first manner and second manner, the optical receiving device may determine the value relationship based on a preprocessed target digital electrical signal.

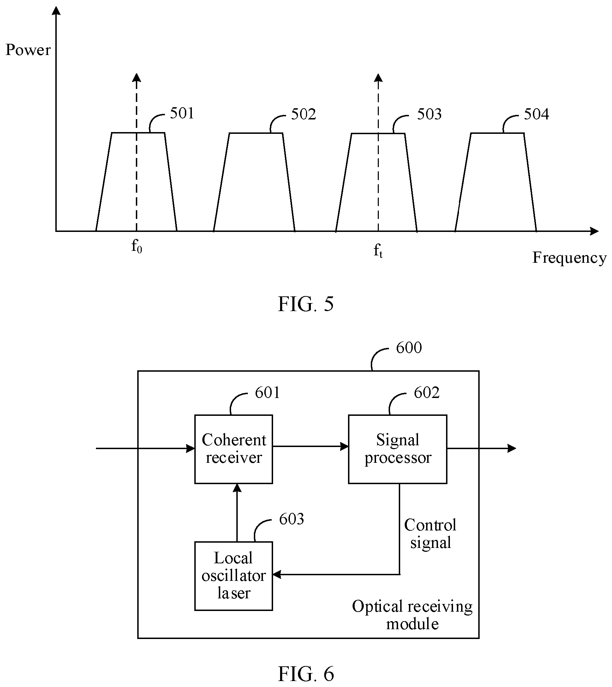

In actual application, an optical transmitting device may send a plurality of wavelength signals of different wavelengths to the optical receiving device. The optical receiving device needs to receive a target optical signal in the plurality of wavelength signals. The target optical signal is N wavelength signals in the plurality of wavelength signals. N is an integer greater than 0. The plurality of wavelength signals are obtained based on a plurality of digital electrical signals. The plurality of wavelength signals are in one-to-one correspondence with the plurality of digital electrical signals. FIG. 5 is a diagram of spectrums of a plurality of digital electrical signals according to an embodiment of this application. As shown in FIG. 5, when a quantity of the plurality of wavelength signals is 4, the four wavelength signals sent by the optical transmitting device to the optical receiving device have four digital electrical signals. In the example in FIG. 5, N is equal to 1.

It can be learned from the foregoing descriptions of FIG. 2b that when the frequency offset between fₜ and f₀ is excessively large, the optical receiving device cannot receive the first digital electrical signal. In FIG. 5, when the frequency offset is excessively large, the optical receiving device may possibly receive another digital electrical signal. If using the another digital electrical signal as the first digital electrical signal, the optical receiving device may incorrectly adjust a frequency, or the optical receiving device cannot correctly determine a value relationship. Therefore, in this embodiment of this application, the optical receiving device may further determine a target digital electrical signal from the plurality of digital electrical signals. After determining the target digital electrical signal, the optical receiving device adjusts the center frequency of the local oscillator laser according to the frequency adjustment method in FIG. 1. The optical receiving device may determine the target digital electrical signal in either of the following two manners.

In a first manner, the target digital electrical signal carries a target identifier. After obtaining the target identifier from a digital electrical signal, the optical receiving device determines the digital electrical signal as the target digital electrical signal. In a specific implementation process, the optical receiving device may adjust the center frequency of the local oscillator laser along a first direction. For example, in FIG. 5, the optical receiving device adjusts the center frequency of the local oscillator laser along a frequency increasing direction. In an adjustment process, the optical receiving device may receive a maximum of four types of digital electrical signals carrying different information. The four types of digital electrical signals carrying different information are respectively digital electrical signals 501 to 504. The digital electrical signal 503 carries the target identifier. When receiving the digital electrical signal 503, the optical receiving device may read the target identifier carried in the digital electrical signal 503. The optical receiving device determines, based on the target identifier, that the digital electrical signal 503 is the target digital electrical signal.

In a second manner, the optical receiving device stores a value K. The optical receiving device may receive K from the optical transmitting device or another device, or K is a default value that is set in the optical receiving device. When frequencies of the plurality of wavelength signals are sorted in the first direction, K represents that the target optical signal is a K^{th} wavelength signal in the plurality of wavelength signals. When frequencies of the plurality of digital electrical signals are sorted in the first direction, K represents that the target digital electrical signal is a K^{th} digital electrical signal in the plurality of digital electrical signals. The optical receiving device determines the target digital electrical signal based on an order of the plurality of digital electrical signals. In a specific implementation process, the optical receiving device may adjust the center frequency of the local oscillator laser along the first direction. For example, in FIG. 5, K is 3, and the optical receiving device adjusts the center frequency of the local oscillator laser along the frequency increasing direction. In an adjustment process, the optical receiving device may receive a maximum of four wave peak signals. The four wave peak signals are in one-to-one correspondence with the four digital electrical signals. When receiving a 3^{rd} wave peak signal, the optical receiving device determines that a digital electrical signal corresponding to the 3^{rd} wave peak signal is the target digital electrical signal.

The foregoing describes the frequency adjustment method provided in embodiments of this application, and the following describes an optical receiving module provided in embodiments of this application. FIG. 6 is a diagram of a structure of an optical receiving module according to an embodiment of this application. As shown in FIG. 6, the optical receiving module 600 includes a coherent receiver 601, a signal processor 602, and a local oscillator laser 603.

The local oscillator laser 603 is configured to output a local oscillator laser signal. The coherent receiver 601 is configured to receive a target optical signal and the local oscillator laser signal, and output a target digital electrical signal based on the target optical signal and the local oscillator laser signal. The signal processor 602 may be a micro control unit (micro control unit, MCU), a digital signal processor (digital signal processor, DSP), a field programmable gate array (field programmable gate array, FPGA), an application-specific integrated circuit (application-specific integrated circuit, ASIC), or the like. The signal processor 602 is configured to obtain a current power value of the target digital electrical signal, and obtain a target frequency offset based on the current power value and a target mapping relationship. The target frequency offset is a difference between a current center frequency of the local oscillator laser signal and a target center frequency of the target optical signal. The target mapping relationship includes a correspondence between a power value and a frequency offset. The signal processor 602 is further configured to output a control signal when the target frequency offset is greater than or equal to a first threshold. The signal processor 602 is further configured to adjust a center frequency of the local oscillator laser 603 by using the control signal, so that the center frequency of the local oscillator laser 603 is close to the target center frequency.

It should be understood that, for descriptions of the optical receiving module 600, refer to the foregoing descriptions of the frequency adjustment method. For example, the signal processor 602 is further configured to obtain a value relationship between the current center frequency and the target center frequency based on the target digital electrical signal. For another example, the local oscillator laser 603 is configured to output a plurality of local oscillator laser signals of different wavelengths. The coherent receiver 601 is further configured to receive a plurality of wavelength signals and a plurality of local oscillator laser signals, and output a plurality of digital electrical signals. The signal processor 602 is further configured to determine the target value electrical signal from the plurality of digital electrical signals.

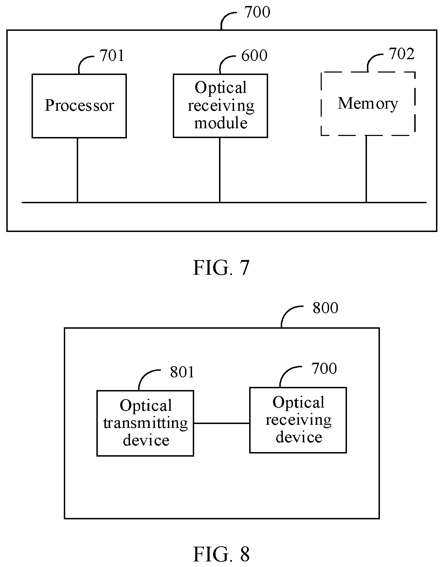

The foregoing describes the optical receiving module provided in embodiments of this application, and the following describes an optical receiving device provided in embodiments of this application. FIG. 7 is a diagram of a structure of an optical receiving device according to an embodiment of this application. As shown in FIG. 7, the optical receiving device 700 includes an optical receiving module 600 and a processor 701. For descriptions of the optical receiving module 600, refer to the foregoing descriptions in FIG. 6. The optical receiving module 600 is configured to receive a target optical signal, and obtain a target digital electrical signal based on the target optical signal. The processor 701 is configured to receive the target digital electrical signal, and perform data processing, for example, storage, operation, or reply, on the target digital electrical signal. The processor 701 may be a central processing unit (central processing unit, CPU), a network processor (network processor, NP), or a combination of the CPU and the NP. The processor 701 may alternatively be a graphics processing unit (graphics processing unit, GPU). The processor 701 may further include a hardware chip or another general-purpose processor. The foregoing hardware chip may be an application-specific integrated circuit (application-specific integrated circuit, ASIC), a programmable logic device (programmable logic device, PLD), or a combination thereof.

In actual application, the optical receiving device 700 may further include a memory 702. The memory 702 may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), a flash memory, or the like. The volatile memory may be a random access memory (random access memory, RAM). The memory 702 is separately connected to the optical receiving module 600 and the processor 701. The memory 702 may be configured to store the target digital electrical signal, a target mapping relationship, a first threshold, or the like.

It should be understood that, in actual application, the optical receiving device 700 may further include an optical transmitting module. The optical transmitting module and the optical receiving module 600 may be disposed independently. The optical receiving module and the optical transmitting module may alternatively be integrated on a same board. In this case, the optical receiving module 600 and the optical transmitting module are collectively referred to as an optical transceiver module. Therefore, in this embodiment of this application, the optical receiving module 600 may also be referred to as an optical transceiver module.

FIG. 8 is a diagram of a structure of an optical communication system according to an embodiment of this application. As shown in FIG. 8, the optical communication system 800 includes an optical transmitting device 801 and an optical receiving device 700. For descriptions of the optical receiving device 700, refer to the foregoing descriptions in FIG. 7. The optical transmitting device 801 is connected to the optical receiving device 700 through an optical fiber. The optical transmitting device 801 is configured to transmit a target optical signal to the optical receiving device 700. The optical receiving device 700 is configured to receive the target optical signal, obtain a target digital electrical signal based on the target optical signal, and perform data processing on the target digital electrical signal. It should be understood that the optical receiving device 700 may also transmit the target optical signal to the optical transmitting device 801. Therefore, for descriptions of the optical transmitting device 801, refer to the descriptions of the optical receiving device 700.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. An optical receiving module, comprising a local oscillator laser, a coherent receiver, and a signal processor, wherein
the local oscillator laser is configured to output a local oscillator laser signal;
the coherent receiver is configured to receive a target optical signal and the local oscillator laser signal, and output a target digital electrical signal based on the target optical signal and the local oscillator laser signal;
the signal processor is configured to obtain a current power value of the target digital electrical signal, and obtain a target frequency offset based on the current power value and a target mapping relationship, wherein the target frequency offset is a difference between a current center frequency of the local oscillator laser signal and a target center frequency of the target optical signal, and the target mapping relationship comprises a correspondence between a power value and a frequency offset; and
the signal processor is further configured to adjust a center frequency of the local oscillator laser when the target frequency offset is greater than or equal to a first threshold.

2. The optical receiving module according to claim 1, wherein
the signal processor is further configured to obtain a value relationship between the current center frequency and the target center frequency; and
that the signal processor is further configured to adjust a center frequency of the local oscillator laser when the target frequency offset is greater than or equal to a first threshold comprises:
when the current center frequency is greater than the target center frequency, the signal processor is configured to decrease the center frequency of the local oscillator laser; and
when the current center frequency is less than the target center frequency, the signal processor is configured to increase the center frequency of the local oscillator laser.

3. The optical receiving module according to claim 2, wherein
that the signal processor is further configured to obtain a value relationship between the current center frequency and the target center frequency comprises: the signal processor is configured to obtain the value relationship between the current center frequency and the target center frequency based on the target digital electrical signal.

4. The optical receiving module according to claim 3, wherein the center frequency of the local oscillator laser signal gradually changes along a first direction;
the signal processor is further configured to obtain a target power change curve of the target digital electrical signal; and
that the signal processor is configured to obtain the value relationship between the current center frequency and the target center frequency based on the target digital electrical signal comprises: the signal processor is configured to obtain the value relationship based on the target power change curve, wherein when the target power change curve gradually increases along the first direction, the target center frequency is located in the first direction of the current center frequency.

5. The optical receiving module according to claim 3, wherein
the signal processor is further configured to obtain two power values of the target digital electrical signal at different frequencies, wherein the two power values comprise a first power value and a second power value, and a frequency corresponding to the second power value is greater than a frequency corresponding to the first power value; and
that the signal processor is configured to obtain the value relationship between the current center frequency and the target center frequency based on the target digital electrical signal comprises: the signal processor is configured to obtain the value relationship based on the two power values, wherein when the second power value is greater than the first power value, the target center frequency is greater than the current center frequency.

6. The optical receiving module according to any one of claims 1 to 5, wherein
that the coherent receiver is configured to receive a service optical signal comprises: the coherent receiver is configured to receive a plurality of wavelength signals of different wavelengths, wherein the target optical signal is N wavelength signals in the plurality of wavelength signals, N is an integer greater than 0, and the plurality of wavelength signals are in one-to-one correspondence with a plurality of digital electrical signals; and
the signal processor is further configured to determine the target digital electrical signal from the plurality of digital electrical signals.

7. The optical receiving module according to claim 6, wherein frequencies of the plurality of wavelength signals are sorted in the first direction, and the target optical signal is a K^{th} wavelength signal in the plurality of wavelength signals; and
that the signal processor is further configured to determine the target digital electrical signal from the plurality of digital electrical signals comprises: the signal processor is configured to determine that a K^{th} digital electrical signal in the plurality of digital electrical signals is the target digital electrical signal, wherein frequencies of the plurality of digital electrical signals are sorted in the first direction.

8. The optical receiving module according to claim 6, wherein the target optical signal carries a target identifier; and
that the signal processor is further configured to determine the target digital electrical signal from the plurality of digital electrical signals comprises: the signal processor is configured to determine the target digital electrical signal from the plurality of digital electrical signals based on the target identifier.

9. An optical receiving device, comprising a processor and the optical receiving module according to any one of claims 1 to 8, wherein
the optical receiving module is configured to receive a target optical signal, and obtain a target digital electrical signal based on the target optical signal; and
the processor is configured to receive the target digital electrical signal, and perform data processing on the target digital electrical signal.

10. A frequency adjustment method, comprising:
outputting a local oscillator laser signal via a local oscillator laser;
obtaining a target digital electrical signal based on the local oscillator laser signal and a received target optical signal;
obtaining a target frequency offset based on a current power value of the target digital electrical signal and a target mapping relationship, wherein the target frequency offset is a difference between a current center frequency of the local oscillator laser signal and a target center frequency of the target optical signal, and the target mapping relationship comprises a correspondence between a power value and a frequency offset; and
adjusting a center frequency of the local oscillator laser when the target frequency offset is greater than or equal to a first threshold.

11. The frequency adjustment method according to claim 10, wherein the method further comprises:
obtaining a value relationship between the current center frequency and the target center frequency; and
the adjusting a center frequency of the local oscillator laser when the target frequency offset is greater than or equal to a first threshold comprises:
when the current center frequency is greater than the target center frequency, decreasing the center frequency of the local oscillator laser; and
when the current center frequency is less than the target center frequency, increasing the center frequency of the local oscillator laser.

12. The frequency adjustment method according to claim 11, wherein
the obtaining a value relationship between the current center frequency and the target center frequency comprises: obtaining the value relationship between the current center frequency and the target center frequency based on the target digital electrical signal.

13. The frequency adjustment method according to claim 12, wherein the center frequency of the local oscillator laser signal gradually changes along a first direction, and the method further comprises:
obtaining a target power change curve of the target digital electrical signal; and
the obtaining the value relationship between the current center frequency and the target center frequency based on the target digital electrical signal comprises: obtaining the value relationship based on the target power change curve, wherein when the target power change curve gradually increases along the first direction, the target center frequency is located in the first direction of the current center frequency.

14. The frequency adjustment method according to claim 12, wherein the method further comprises:
obtaining two power values of the target digital electrical signal at different frequencies, wherein the two power values comprise a first power value and a second power value, and a frequency corresponding to the second power value is greater than a frequency corresponding to the first power value; and
the obtaining the value relationship between the current center frequency and the target center frequency based on the target digital electrical signal comprises: obtaining the value relationship based on the two power values, wherein when the second power value is greater than the first power value, the target center frequency is greater than the current center frequency.

15. The frequency adjustment method according to any one of claims 10 to 14, wherein the method further comprises:
receiving a plurality of wavelength signals of different wavelengths, wherein the target optical signal is N wavelength signals in the plurality of wavelength signals, N is an integer greater than 0, and the plurality of wavelength signals are in one-to-one correspondence with a plurality of digital electrical signals; and
determining the target digital electrical signal from the plurality of digital electrical signals.

16. The frequency adjustment method according to claim 15, wherein frequencies of the plurality of wavelength signals are sorted in the first direction, and the target optical signal is a K^{th} wavelength signal in the plurality of wavelength signals; and
the determining the target digital electrical signal from the plurality of digital electrical signals comprises: determining that a K^{th} digital electrical signal in the plurality of digital electrical signals is the target digital electrical signal, wherein frequencies of the plurality of digital electrical signals are sorted in the first direction.

17. The frequency adjustment method according to claim 15, wherein the target optical signal carries a target identifier; and
the determining the target digital electrical signal from the plurality of digital electrical signals comprises: determining the target digital electrical signal from the plurality of digital electrical signals based on the target identifier.
